# EUROPEAN PATENT SPECIFICATION

(11) **EP 1 966 089 B1**
(45) Date of publication and mention of the grant of the patent: **10.05.2017**
(21) Application number: 06830356.9
(22) Date of filing: 05.12.2006
(51) Int. Cl.: C01F 7/02, C09C 1/40, C04B 35/117, C04B 35/626, C04B 35/632, B82Y 30/00

(54) **HIGHLY FILLED DISPERSIONS CONTAINING ALUMINIUM OXIDE**
HOCHGEFÜLLTE ALUMINIUMOXID ENTHALTENDE DISPERSIONEN
DISPERSIONS FORTEMENT CHARGÉES CONTENANT DE L'OXYDE D'ALUMINIUM

(30) Priority: 15.12.2005 DE 102005059961
(43) Date of publication of application: 10.09.2008
(73) Proprietor: Evonik Degussa GmbH, 45128 Essen (DE)
(72) Inventor: OSWALD, Monika, 63454 Hanau (DE); KISSNER, Corinna, 63450 Hanau (DE)
(86) International application number: PCT/EP2006/069306
(87) International publication number: WO 2007/068623

(56) References cited:
- DE-A1- 19 603 584
- SMITH P A ET AL: "Effect of Particle Packing on the filtration and rheology behavior of extended size distribution alumina suspensions" JOURNAL OF THE AMERICAN CHEMICAL SOCIETY, AMERICAN CHEMICAL SOCIETY, WASHINGTON, DC, US, vol. 78, no. 1, 1995, pages 1737-1744, XP002345227 ISSN: 0002-7863 cited in the application
- SHI J-L ET AL: "COMPACTION AND SINTERING BEHAVIOR OF BIMODAL ALUMINA POWDER SUSPENSIONS BY PRESSURE FILTRATION" JOURNAL OF THE AMERICAN CERAMIC SOCIETY, BLACKWELL PUBLISHING, MALDEN, MA, US, vol. 83, no. 4, April 2000 (2000-04), pages 737-742, XP000923793 ISSN: 0002-7820 cited in the application
- A. SRINIVASA RAO: "Electrophoretic Mobility of Alumina, Titania and their Mixtures in Aqueous Dispersions" CERAMICS INTERNATIONAL, vol. 14, no. 2, 1988, pages 71-76, XP002420398 Elsevier Applied Science Publishers Ltd, England

## Description

The invention relates to a dispersion containing transition aluminium oxide and a metal oxide, its production and use.

It is known that ceramic bodies can be produced by means of highly filled metal oxide dispersions. The requirements which the dispersion has to meet comprise mainly a low viscosity and a high degree of fill in order to minimize shrinkage and cracks in thermal treatment steps. It is also known that a high degree of fill can be achieved by means of a bimodal distribution of the particle sizes in which the gaps between the coarse particles are filled by finer particles.

Shi and Zhang, Journal of the American Ceramic Society 83 (2000), 737, disclose a bimodal aluminium oxide dispersion using aluminium oxide powders having a particle diameter determined by transmission electron microscopy of 0.17, 0.37 and 0.86 µm. The dispersions are obtained by stirring two of these powders into water and subsequently setting the pH. The optimal proportion of an in each case finer aluminium oxide is about 30%, based on the sum of coarse and fine aluminium oxide, in order to obtain a still processible dispersion and a substantially dense green body. According to Shi and Zhang, the total aluminium oxide content can be up to 45% by volume. However, the sintering activity of the aluminium oxides remains in need of improvement.

Smith and Haber, Journal of the American Ceramic Society 78 (1995), 1737, disclose bimodal dispersions of aluminium oxide using an aluminium oxide powder having a mean particle size of more than 1 µm (85 parts) and one having a mean particle size of 0.4 µm (15 parts) and having a content of up to 50% by volume. Here too, the sintering activity of the aluminium oxides remains in need of improvement.

It is an object of the invention to provide a highly filled, low-viscosity dispersion containing aluminium oxide which has a high sintering activity on thermal treatment.

The invention provides an aqueous dispersion containing:
- at least one metal oxide selected from the group consisting of alpha-aluminium oxide, cerium oxide, silicon dioxide, titanium dioxide and zirconium dioxide and in addition at least one transition aluminium oxide which is present in the form of aggregates of primary particles, wherein
   - the total content of metal oxide and transition aluminium oxide is from 60 to 75% by weight, based on the total amount of the dispersion,
   - the content of transition aluminium oxide is from 30 to 45% by weight, based on the total amount of the dispersion,
   - the BET surface area of the transition aluminium oxide is from 30 to 90 m²/g,
   - the mean aggregate diameter of the transition aluminium oxide is less than 100 nm,
   - the mean particle diameter of the metal oxide is from 100 to 500 nm, and
- a dispersant selected from the group consisting of polyaluminium hydroxychloride, polyaluminium hydroxynitrate and/or polyaluminium hydroxysulphate.

The term metal oxide is to be interpreted as excluding transition aluminium oxides and including silicon dioxide as metalloid oxide.

The transition aluminium oxide present in the transition aluminium oxide dispersion includes chi-, kappa-, gamma-, delta- and theta-aluminium oxide. Apart from these crystalline constituents, small proportions of amorphous aluminium oxide can also be present. The dispersion contains only transition aluminium oxide as solid. The main constituent is preferably gamma-aluminium oxide, delta-aluminium oxide, theta-aluminium oxide or a mixture thereof. The transition aluminium oxide particularly preferably comprises at least 60% of a mixture of delta-aluminium oxide and theta-aluminium oxide. Alpha-aluminium oxide cannot be detected. The transition aluminium oxide is present in the form of aggregates of primary particles and has a BET surface area of from 30 to 90 m²/g, preferably from 40 to 80 m²/g and particularly preferably from 55 to 70 m²/g.

The transition aluminium oxide can preferably be obtained by a pyrogenic process. Such a process can be flame hydrolysis and/or flame oxidation. Here, organic or inorganic aluminium compounds, for example aluminium chloride, are reacted in the presence of steam and/or oxygen to form aluminium oxide. The resulting primary particles are not porous and have hydroxyl groups on their surface. In the case of a chloride-containing aluminium compound as starting material, the aluminium oxide can also contain small amounts of chloride, in general less than 0.1% by weight. The transition aluminium oxide dispersion is preferably produced using an aluminium oxide containing less than 300 ppm of chloride.

The total content of metal oxide and transition aluminium oxide is preferably from 63 to 70% by weight, based on the total amount of mixed oxide dispersion.

The content of transition aluminium oxide in the mixed oxide dispersion is preferably from 35 to 40% by weight, based on the total amount of the dispersion.

The mean particle diameter of the metal oxide is from 100 to 500 nm and thus greater than that of the transition aluminium oxide. The particle diameter of the metal oxide is preferably from 200 to 400 nm. The metal oxide particles can be present in the form of aggregated or unaggregated particles.

The metal oxide is preferably alpha-aluminium oxide, which usually has a BET surface area of from 5 to 20 m²/g.

The mixed oxide dispersion preferably has a pH of from 3 to 5.

The invention further provides a process for producing the dispersion of the invention, in which
- the metal oxide in the form of a powder having a mean particle diameter of from 100 to 500 nm
is added with agitation to
- the transition aluminium oxide in the form of a starting dispersion
   - which contains transition aluminium oxide as only solid,
   - in which the aluminium oxide is present in the form of aggregates of primary particles which have a BET surface area of from 30 to 90 m²/g and whose aggregates in the dispersion have a mean aggregate diameter of less than 100 nm,
   - whose content of aluminium oxide is from 40 to 65% by weight,
   - which contains polyaluminium hydroxychloride, polyaluminium hydroxynitrate and/or polyaluminium hydroxysulphate as dispersant and
   - which has a pH of from 3 to 5.

The aqueous dispersion which contains exclusively transition aluminium oxide as solid will hereinafter be referred to as transition aluminium oxide dispersion.

The mean aggregate diameter of the transition aluminium oxide dispersion is preferably from 70 to 90 nm. The mean aggregate diameter can be determined, for example, by laser light scattering.

Furthermore, the pH of the transition aluminium oxide dispersion can preferably be from 3.5 to 4.5. The pH can be adjusted by addition of pH regulators, acids or bases. If aluminium chlorides are used as starting material for preparing aluminium oxide, the pH can already be in the desired pH range as a result of adhering hydrochloric acid.

The dispersion of the invention contains a polyaluminium hydroxychloride (PAC), polyaluminium hydroxynitrate and/or polyaluminium hydroxysulphate as significant constituent, with the dispersion preferably containing polyaluminium hydroxychloride (PAC). This is a water-soluble salt of the formula Alₙ(OH)ₘCl_{(3n-m),} for example Al₂(OH)_{2.6}Cl_{3.4}. The PAC preferably has an aluminium content of from 5 to 25% by weight, calculated as Al₂O₃.

A mixture of PAC with a cationic polymer and/or a cocondensation product of PAC and a cationic dicyandiamide resin has been found to be a particularly advantageous dispersant.

As cationic polymers, preference is given to using polyethylenimines, polydiallyldimethylammonium chlorides or cationic dicyandiamide resins.

The cationic dicyandiamide resins and their preparation are described, for example, in DE-A-3500408. The polyaluminium hydroxychloride and the cationic polymer are preferably present in a weight ratio of from 30:70 to 95:5.

The proportion of dispersant is preferably from 0.1 to 3% by weight, based on the total amount of the dispersion.

Furthermore, the dispersion of the invention can contain a cocondensation product of polyaluminium hydroxychloride and a cationic dicyandiamide resin as constituent. These cocondensation products and their preparation are known from DE-A-3742764. The ratio of PAC to cationic dicyandiamide resin in this cocondensation product can likewise be varied within wide limits, but a molar ratio of aluminium to dicyandiamide of from 15:1 to 2:1 is preferred.

Compounds of the general formula A in which R = CONH₂, CN or H; X = Cl⁻, ½ SO₄²⁻ and n = 5-15 are particularly suitable as constituents of the dispersion of the invention.

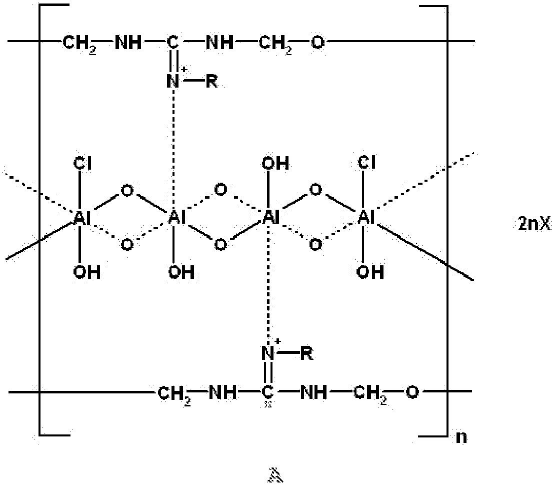

The transition aluminium oxide dispersion can be obtained by, if appropriate, placing one or more additives in water, adding aluminium oxide powder all at once, in portions or continuously and dispersing the mixture by introduction of energy of more than 1000 kJ/m³.

The process can preferably be carried out with dispersion firstly being carried out at an energy input of less than 1000 kJ/m³ to form a predispersion, dividing the predispersion into at least two substreams, placing these substreams under a pressure of at least 500 bar in a high-energy mill, depressurizing via a nozzle and allowing the substreams to impinge on one another in a gas- or liquid-filled reaction space and, if appropriate, repeating the high-energy milling one or more times.

The invention further provides for the use of the mixed oxide dispersion for producing composites.

### Examples

### Transition aluminium oxide dispersion

Example 1 (according to the invention): 37 kg of deionized water and 460 g of ALZOFIX^{®} P9 (a PAC-dicyandiamide cocondensation product, Degussa AG) are placed in a 60 l stainless steel mixing vessel. 25 kg of AEROXIDE^{®} Alu 65 (pyrogenic aluminium oxide, BET = 65 m²/g, main constituents: theta- and delta-aluminium oxide; Degussa AG) are subsequently sucked in under shear conditions by means of an Ystral Conti-TDS 3 suction hose (stator slits: 4 mm ring and 1 mm ring, rotor/stator spacing about 1 mm). A further 340 g of ALZOFIX are then added and 5 kg of AEROXIDE^{®} Alu 65 are sucked in. This alternating addition is carried out a total of 6 times. After the addition is complete, the intake port is closed and shear is applied at 3000 rpm for another 20 minutes. Finally, the predispersion is brought to a content of 55% by weight by means of 5.5 kg of deionized water and sheared once more for a further period of about 5 minutes to homogenize it. This predispersion is passed through a Sugino Ultimaizer HJP-25050 high-energy mill having diamond nozzles having a diameter of 0.3 mm at a pressure of 2500 bar in two passes and thereby subjected to further intensive milling.

The pH is 4.1. The solids content of the dispersion is 55% by weight. The mean aggregate diameter is 83 nm (determined by means of a Horiba LA-910). The dispersion displays no signs of gelling or sedimentation even after 6 months. Example 2 (comparative example): 61 kg of deionized water are placed in a 60 l stainless steel mixing vessel. 27.0 kg of AEROXIDE^{®} Alu C (BET = 100 m²/g, main constituent: gamma-aluminium oxide) Degussa are subsequently sucked in under shear conditions by means of an Ystral Conti-TDS 3 suction hose (stator slits: 4 mm ring and 1 mm ring, rotor/stator spacing about 1 mm). The pH is maintained in the range from 4.0 to 4.5 by addition of 50% strength acetic acid. 0.9 kg of 50% strength acetic acid are required. After drawing-in is complete, the intake port is closed and shear is applied at 3000 rpm for another 10 minutes. The pH after predispersion is 4.1 and was adjusted to 4.0 by means of a further 0.1 kg of acetic acid, the predispersion was brought to an aluminium oxide concentration of 30% by weight by addition of 1 kg of deionized water and sheared once more for a further period of about 5 minutes to homogenize it. This predispersion is passed through a Sugino Ultimaizer HJP-25050 high-energy mill having diamond nozzles having a diameter of 0.3 mm at a pressure of 2500 bar in two passes and thereby subjected to further intensive milling.

The pH is 4.4. The solids content of the dispersion is 30% by weight. The mean aggregate diameter is 86 nm (Horiba LA-910).

### Mixed oxide dispersion

Example 3: 550 g of the dispersion from Example 1 are placed in a vessel. While stirring by means of a laboratory stirrer, 155 g of alpha-aluminium oxide powder (AKP-50, Sumitomo, mean particle size about 200 nm) are added.

Examples 4 and 5: analogous to Example 3 but using the amounts indicated in Table 1.

Example 6: analogous to Example 3 but using the dispersion from Example 2.

The dispersion from Example 5 has a viscosity of 1000 mPas at 23°C and a shear rate of 100 s⁻¹.

The mixed oxide dispersion has a proportion of finely divided transition aluminium oxide of at least 30% by weight, based on the total amount of the dispersion. Based on the total solids, the proportion of finely divided transition aluminium oxide is at least 40%. The mixed oxide dispersion can be produced by simple stirring of the metal oxide into the transition aluminium oxide dispersion.

**Table 1: Starting materials for producing the mixed oxide dispersions**

| **Example** | | **3** | **4** | **5** | **6** |
|---|---|---|---|---|---|
| Transition Al₂O₃ dispersion from Example | | 1 | 1 | 1 | 2 |
| Amount of dispersion | g | 550 | 550 | 550 | 400 |
| of which transition Al₂O₃ | g | 302.5 | 302.5 | 302.5 | 120 |
| conc. of transition Al₂O₃ | % by weight | 55 | 55 | 55 | 30 |
| + alpha-Al₂O₃ | g | 155 | 247.3 | 315.3 | 111 |
| + hydrochloric acid (1M) | g | - | 29.3 | 29.3 | - |
| Total amount of mixed oxide dispersion | g | 705 | 826.6 | 894.6 | 511 |
| Conc. of transition Al₂O₃ | % by weight | 43 | 37 | 34 | 23 |
| Conc. of alpha-Al₂O₃ | % by weight | 22 | 30 | 35 | 22 |
| Conc. of total Al₂O₃ | % by weight | 65 | 67 | 69 | 45 |
| pH | | 4.03 | 3.35 | 3.58 | 4.59 |
| Observation | | readily pourable | readily pourable | readily pourable | not pourable, lumpy |

## Claims

1. Aqueous dispersion containing:
- at least one metal oxide selected from the group consisting of alpha-aluminium oxide, cerium oxide, silicon dioxide, titanium dioxide and zirconium dioxide and in addition at least one transition aluminium oxide which is present in the form of aggregates of primary particles, wherein
- the total content of metal oxide and transition aluminium oxide is from 60 to 75% by weight, based on the total amount of the dispersion,
- the content of transition aluminium oxide is from 30 to 45% by weight, based on the total amount of the dispersion,
- the BET surface area of the transition aluminium oxide is from 30 to 90 m²/g,
- the mean aggregate diameter of the transition aluminium oxide is less than 100 nm,
- the mean particle diameter of the metal oxide is from 100 to 500 nm, and
- a dispersant selected from the group consisting of polyaluminium hydroxychloride, polyaluminium hydroxynitrate and/or polyaluminium hydroxysulphate.

2. Aqueous dispersion according to Claim 1, **characterized in that** the total content of metal oxide and transition aluminium oxide is from 63 to 70% by weight, based on the total amount of the dispersion.

3. Aqueous dispersion according to Claim 1 or 2, **characterized in that** the content of transition aluminium oxide is from 35 to 40% by weight, based on the total amount of the dispersion.

4. Aqueous dispersion according to any of Claims 1 to 3, **characterized in that** the transition aluminium oxide contains theta- and delta-aluminium oxide as main constituent.

5. Aqueous dispersion according to any of Claims 1 to 4, **characterized in that** the BET surface area of the transition aluminium oxide is from 50 to 80 m²/g.

6. Aqueous dispersion according to any of Claims 1 to 5, **characterized in that** the mean particle diameter of the metal oxide is from 150 to 250 nm.

7. Aqueous dispersion according to any of Claims 1 to 7, **characterized in that** the metal oxide is alpha-aluminium oxide.

8. Aqueous dispersion according to any of Claims 1 to 8, **characterized in that** its pH is from 3 to 5.

9. Aqueous dispersion according to any of Claims 1 to 8, **characterized in that** the dispersant is polyaluminium hydroxychloride, a mixture of polyaluminium hydroxychloride and a cationic polymer and/or a cocondensation product of polyaluminium hydroxychloride and a cationic dicyandiamide resin.

10. Aqueous dispersion according to any of Claims 1 to 9, **characterized in that** the proportion of dispersant is from 0.1 to 3% by weight, based on the total amount of the dispersion.

11. Process for producing the aqueous dispersion according to any of Claims 1 to 9, **characterized in that**
- the metal oxide in the form of a powder having a mean particle diameter of from 100 to 500 nm
is added with agitation to
- the transition aluminium oxide in the form of a starting dispersion
- which contains transition aluminium oxide as only solid,
- in which the aluminium oxide is present in the form of aggregates of primary particles which have a BET surface area of from 30 to 90 m²/g and whose aggregates in the dispersion have a mean aggregate diameter of less than 100 nm,
- whose content of aluminium oxide is from 40 to 65% by weight,
- which contains polyaluminium hydroxychloride, polyaluminium hydroxynitrate and/or polyaluminium hydroxysulphate as dispersant and
- which has a pH of from 3 to 5.

12. Use of the aqueous dispersion according to any of Claims 1 to 9 for producing composites.

## Patentansprüche

1. Wässerige Dispersion, enthaltend:
- wenigstens ein Metalloxid ausgewählt aus der Gruppe umfassend alpha-Aluminiumoxid, Ceroxid, Siliciumdioxid, Titandioxid oder Zirkondioxid und weiterhin wenigstens ein Übergangs-Aluminiumoxid, welches in Form von Aggregaten von Primärpartikeln vorliegt, wobei
- der Gehalt an Metalloxid und Übergangs-Aluminiumoxid in Summe 60 bis 75 Gew.-%, bezogen auf die Gesamtmenge der Dispersion, ist,
- der Gehalt an Übergangs-Aluminiumoxid 30 bis 45 Gew.-%, bezogen auf die Gesamtmenge der Dispersion ist,
- die BET-Oberfläche des Übergangs-Aluminiumoxides 30 bis 90 m²/g beträgt,
- der mittlere Aggregatdurchmesser des Übergangs-Aluminiumoxides kleiner als 100 nm ist,
- der mittlere Partikeldurchmesser des Metalloxides 100 bis 500 nm beträgt, und
- ein Dispergiermittel ausgewählt aus der Gruppe umfassend Polyaluminiumhydroxychlorid, Polyaluminiumhydroxynitrat und/oder Polyaluminiumhydroxysulfat.

2. Wässerige Dispersion nach Anspruch 1, **dadurch gekennzeichnet, dass** der Gehalt an Metalloxid und Übergangs-Aluminiumoxid in Summe 63 bis 70 Gew.-%, bezogen auf die Gesamtmenge der Dispersion, beträgt.

3. Wässerige Dispersion nach Anspruch 1 oder 2, **dadurch gekennzeichnet, dass** der Gehalt an Übergangs-Aluminiumoxid 35 bis 40 Gew.-%, bezogen auf die Gesamtmenge der Dispersion, beträgt.

4. Wässerige Dispersion nach einem der Ansprüche 1 bis 3, **dadurch gekennzeichnet, dass** das Übergangs-Aluminiumoxid als Hauptbestandteil theta- und delta-Aluminiumoxid aufweist.

5. Wässerige Dispersion nach einem der Ansprüche 1 bis 4, **dadurch gekennzeichnet, dass** die BET-Oberfläche des Übergangs-Aluminiumoxides 50 bis 80 m²/g beträgt.

6. Wässerige Dispersion nach einem der Ansprüche 1 bis 5, **dadurch gekennzeichnet, dass** der mittlere Partikeldurchmesser des Metalloxides 150 bis 250 nm beträgt.

7. Wässerige Dispersion nach einem der Ansprüche 1 bis 7, **dadurch gekennzeichnet, dass** das Metalloxid alpha-Aluminiumoxid ist.

8. Wässerige Dispersion nach einem der Ansprüche 1 bis 8, **dadurch gekennzeichnet, dass** ihr pH-Wert 3 bis 5 beträgt.

9. Wässerige Dispersion nach einem der Ansprüche 1 bis 8, **dadurch gekennzeichnet, dass** das Dispergiermittel Polyaluminiumhydroxychlorid, ein Gemisch aus Polyaluminiumhydroxychlorid und einem kationischen Polymer und/oder ein Co-Kondensationsprodukt von Polyaluminiumhydroxychlorid und einem kationischen Dicyandiamidharz ist.

10. Wässerige Dispersion nach einem der Ansprüche 1 bis 9, **dadurch gekennzeichnet, dass** der Anteil an Dispergiermittel 0,1 bis 3 Gew.-%, bezogen auf die Gesamtmenge der Dispersion, beträgt.

11. Verfahren zur Herstellung der wässerigen Dispersion gemäß der Ansprüche 1 bis 9, **dadurch gekennzeichnet, dass** man
- das Metalloxid in Form eines Pulvers mit einem mittleren Partikeldurchmesser von 100 bis 500 nm
unter Bewegung zu
- dem Übergangs-Aluminiumoxid in Form einer Ausgangs-Dispersion gibt,
- welche Übergangs-Aluminiumoxid als einzigen Feststoff aufweist,
- in welcher das Aluminiumoxid in Form von Aggregaten von Primärpartikeln vorliegt, die eine BET-Oberfläche von 30 bis 90 m²/g besitzen und deren Aggregate in der Dispersion einen mittleren Aggregatdurchmesser von weniger als 100 nm aufweisen,
- deren Gehalt an Aluminiumoxid 40 bis 65 Gew.-% beträgt,
- welche als Dispergiermittel Polyaluminiumhydroxychlorid, Polyaluminiumhydroxynitrat und/oder Polyaluminiumhydroxysulfat enthält und
- die einen pH-Wert von 3 bis 5 aufweist.

12. Verwendung der wässerigen Dispersion nach einem der Ansprüche 1 bis 9 zur Herstellung von Verbundwerkstoffen.

## Revendications

1. Dispersion aqueuse contenant :
- au moins un oxyde métallique choisi dans le groupe constitué de l'oxyde d'alpha-aluminium, l'oxyde de cérium, le dioxyde de silicium, le dioxyde de titane et le dioxyde de zirconium et en outre, au moins un oxyde d'aluminium de transition qui est présent sous la forme d'agrégats de particules primaires, où
- la teneur totale en oxyde métallique et en oxyde d'aluminium de transition est de 60 à 75 % en poids, sur la base de la quantité totale de la dispersion,
- la teneur en oxyde d'aluminium de transition est de 30 à 45 % en poids, sur la base de la quantité totale de la dispersion,
- la surface BET de l'oxyde d'aluminium de transition est de 30 à 90 m²/g,
- le diamètre d'agrégat moyen de l'oxyde d'aluminium de transition est inférieur à 100 nm,
- le diamètre de particule moyen de l'oxyde métallique est de 100 à 500 nm, et
- un dispersant choisi dans le groupe constitué du poly(hydroxychlorure d'aluminium), du poly(hydroxynitrate d'aluminium) et/ou du poly(hydroxysulfate d'aluminium).

2. Dispersion aqueuse selon la revendication 1,
**caractérisée en ce que** la teneur totale en oxyde métallique et en oxyde d'aluminium de transition est de 63 à 70 % en poids, sur la base de la quantité totale de la dispersion.

3. Dispersion aqueuse selon la revendication 1 ou 2,
**caractérisée en ce que** la teneur en oxyde d'aluminium de transition est de 35 à 40 % en poids, sur la base de la quantité totale de la dispersion.

4. Dispersion aqueuse selon l'une quelconque des revendications 1 à 3,
**caractérisée en ce que** l'oxyde d'aluminium de transition contient de l'oxyde de thêta- et delta-aluminium en tant que constituant principal.

5. Dispersion aqueuse selon l'une quelconque des revendications 1 à 4,
**caractérisée en ce que** la surface BET de l'oxyde d'aluminium de transition est de 50 à 80 m²/g.

6. Dispersion aqueuse selon l'une quelconque des revendications 1 à 5,
**caractérisée en ce que** le diamètre de particule moyen de l'oxyde métallique est de 150 à 250 nm.

7. Dispersion aqueuse selon l'une quelconque des revendications 1 à 7,
**caractérisée en ce que** l'oxyde métallique est l'oxyde d'alpha-aluminium.

8. Dispersion aqueuse selon l'une quelconque des revendications 1 à 8,
**caractérisée en ce que** son pH est de 3 à 5.

9. Dispersion aqueuse selon l'une quelconque des revendications 1 à 8,
**caractérisée en ce que** le dispersant est le poly(hydroxychlorure d'aluminium), un mélange de poly(hydroxychlorure d'aluminium) et d'un polymère cationique et/ou un produit de co-condensation de poly(hydroxychlorure d'aluminium) et d'une résine dicyandiamide cationique.

10. Dispersion aqueuse selon l'une quelconque des revendications 1 à 9, **caractérisée en ce que** la proportion de dispersant est de 0,1 à 3 % en poids, sur la base de la quantité totale de la dispersion.

11. Procédé de production de la dispersion aqueuse selon l'une quelconque des revendications 1 à 9, **caractérisée en ce que**
- l'oxyde métallique sous la forme d'une poudre ayant un diamètre de particule moyen de 100 à 500 nm est ajouté sous agitation à
- l'oxyde d'aluminium de transition sous la forme d'une dispersion de départ
- qui contient de l'oxyde d'aluminium de transition en tant que seul solide,
- dans lequel l'oxyde d'aluminium est présent sous la forme d'agrégats de particules primaires qui ont une surface BET de 30 à 90 m²/g et dont les agrégats dans la dispersion ont un diamètre d'agrégat moyen inférieur à 100 nm,
- dont la teneur en oxyde d'aluminium est de 40 à 65 % en poids,
- qui contient du poly(hydroxychlorure d'aluminium), du poly(hydroxynitrate d'aluminium) et/ou du poly(hydroxysulfate d'aluminium) en tant que dispersant et
- qui a un pH de 3 à 5.

12. Utilisation de la dispersion aqueuse selon l'une quelconque des revendications 1 à 9 pour produire des composites.
